# EUROPÄISCHE PATENTSCHRIFT

(11) **EP 2 427 267 B1**
(45) Veröffentlichungstag und Bekanntmachung des Hinweises auf die Patenterteilung: **24.02.2021**
(21) Anmeldenummer: 10725009.4
(22) Anmeldetag: 04.05.2010
(51) Int. Cl.: B01J 19/00, B01L 3/00, G01N 33/543

(54) **WIEDERERKENNBARER TRÄGER FÜR OPTISCHE MESSVERFAHREN**
RECOGNIZABLE CARRIER FOR OPTICAL MEASURING METHODS
SUPPORT RECONNAISSABLE POUR PROCÉDÉS DE MESURE OPTIQUES

(30) Priorität: 04.05.2009 DE 102009019476
(43) Veröffentlichungstag der Anmeldung: 14.03.2012
(73) Patentinhaber: BioCopy Holding AG, 8355 Aadorf (CH)
(72) Erfinder: LANDGRAF, Johannes, 76229 Karlsruhe (DE); PROLL, Günther, 73770 Denkendorf (DE); PRÖLL, Florian, 68165 Mannheim (DE)
(74) Vertreter: Hertin und Partner Rechts- und Patentanwälte PartG mbB
(86) Internationale Anmeldenummer: PCT/EP2010/002728
(87) Internationale Veröffentlichungsnummer: WO 2010/127834

(56) Entgegenhaltungen:
- EP-A1- 1 388 587
- EP-A2- 1 584 372
- WO-A2-02/18945
- WO-A2-02/059603
- GB-A- 2 404 918
- US-A1- 2005 026 193

## Beschreibung

Die Erfindung betrifft einen wiedererkennbaren Träger für die Bestimmung physikalischer, chemischer oder biochemischer Wechselwirkungen mittels optischer Meßverfahren, mit einer Oberfläche, die eine Substratoberfläche definiert, und die eine Grundschicht aufweist, welche mit reaktiven Elementen beschichtet ist, die ihrerseits eine Bindung zu Fängermolekülen aufweisen.
Ebenso umfaßt ist ein Verfahren zur Herstellung des wiedererkennbaren Trägers für die Bestimmung physikalischer, chemischer oder biochemischer Wechselwirkungen mittels optischer Meßverfahren sowie erfindungsgemäße Verwendungen.

Die Codierung von Microarrays oder allgemein von Analysenträgern zur Erkennung von Mustern, um daraus verschiedene Informationen abzuleiten, wird immer bedeutsamer und der Bedarf nach solchen Codierungen nimmt immer mehr zu. Die Art der Codierungen ist inzwischen mannigfaltig und doch untereinander individuell verschieden.

So wird durch die DE 600 22 043 T2 ein Mikroarray-Chip mit einer Mustererkennung offenbart, der mit einem speziellen Spotmuster reaktiver Elemente versehen ist. Ausgewählte Spots dienen der Mustererkennung. Diese werden in solche unterschieden, die einen farbentwickelnden Farbstoff aufweisen oder zumindest eine Substanz, die einen solchen Farbstoff akkumulieren kann, und in solche, denen dieser Farbstoff fehlt. Dadurch entsteht bei Bedarf ein zweidimensionales Muster, dessen Anordnung in Datenbanken hinterlegt und abgefragt werden kann. Als ein solcher Nachweisfarbstoff wird ein Fluoreszenzmarker verwendet. Da die gemäß diesem Stand der Technik vorgeschlagene Mustererkennung zweidimensional ausgerichtet ist, ist sie hinsichtlich der Information, die über das Muster vermittelt werden kann, begrenzt. Die Verwendung von Fluoreszenzmarkern kann die Empfindlichkeit des Arrays ungünstig beeinflussen und bedingt einen eher aufwendigen Meßaufbau.

Demgegenüber versucht die WO 2005/024695 A2 auf der Grundlage einer Methode aus der Bioinformatik, die Nachteile zu überwinden, welche die an sich weit verbreitete Art der Markierung von Microarrays und die Wiedererkennung solcher Markierungen mit sich bringt. Dabei sind die Mustererkennung für die Analyse der zu untersuchenden Reaktion und die Erkennung von Daten, die für das jeweilige Array spezifisch sind, voneinander zu unterscheiden. Denn meistens wird die Markierung für die Mustererkennung in einem Array als eine einmalige, eindeutige Markierung verwendet, welche es einem Benutzer erlaubt, entsprechende Informationen über das Array aus einer Datenbank zu entnehmen. Dazu wird das jeweils markierte Array mit der Probe inkubiert. Bei der Reaktion der Zielstrukturen in der zu untersuchenden Probe mit den hinterlegten Informationen auf dem jeweiligen Array werden dann Daten erhalten, die dem Bindungsmuster bei der Reaktion entsprechen. Und es wird zum Beispiel bei der Verwendung von Fluoreszenzmarkern eine unterschiedliche Farbentwicklung zwischen den hinterlegten Informationen und bei der Reaktion mit den zu untersuchenden Zielstrukturen festgestellt und analysiert. Kombiniert werden solche Daten dann üblicherweise mit körperlich auf den Arrays angebrachten Identifizierungscodes mit allgemeinen Informationen über den Array. Solche Identifizierungscodes können z.B. Barcodes sein. Beide Codierungsarten zusammen sind für die Analyse der Meßdaten aus der Reaktion erforderlich und wichtig. Als Nachteil führt nun der genannte Stand der Technik an, daß die körperlich auf den Arrays angebrachten Identifizierungscodes in der Regel nicht allgemein zugänglich und lesbar sind. Ohne den Schlüssel für diesen Barcode, einem Barcode-Lesegerät oder entsprechenden Datenbankinformationen ist der Barcode nicht zu ermitteln und damit oft die gesamte Information aus der Analyse nicht auswertbar. Auch solche Fälle bereiten Probleme, in denen der Barcode fehlerhaft ist oder nicht bzw. fehlerhaft eingelesen wurde. Solchen Problemen weicht dieser Stand der Technik über eine Codierung aus, die als Bit-Code in Form einer Binärkodierung von Dezimalziffern (BCD-Code) oder als binärer ASCII-Code hinterlegt ist. Auf diese Weise werden eine oder mehrere Informationen pro Array kodiert, können entsprechend über ein Computer-lesbares Medium wieder dekodiert werden, und verschiedene Arten von Informationen werden kombiniert abrufbar. Auch die gemäß diesem Stand der Technik vorgeschlagene Mustererkennung ist zweidimensional ausgerichtet.

Ein weiterer Analysen-Chip mit zweidimensionaler Mustererkennung, der als DNA-Microarray einsetzbar ist, wird in der WO 02/18945 A2 vorgestellt. Dieser Analysen-Chip arbeitet und erkennt Daten nach der Art von Barcodes. Die unterschiedlichen Spotfelder des Arrays sind in Form von Binärcodes an definierter Stelle auf dem Array abgelegt. Dabei korrespondiert jeweils ein Barcode mit einer Molekül-Information der auf dem Array fixierten und für die jeweils zu analysierende Probe charakteristischen Zielstrukturen. Wenn der Analysen-Chip zur Genanalyse eingesetzt wird, kann die Identifizierung der zu untersuchenden DNA-Fragmente über eine unterschiedliche Färbung in der Probe erfolgen.

Alle vorgenannten Analysen-Chips arbeiten nach Analysemethoden, die mit speziellen Markem, in der Regel Fluoreszenzmarkern, arbeiten. Die jeweils vorgeschlagenen Mustererkennungen dienen der Identifizierung der zu untersuchenden Spezies, nicht dem Wiedererkennen des Trägers zum Zwecke seiner Qualitäts- und Originalitätskontrolle für die Gebrauchssicherheit. Fehlerhaftes Ausgangsmaterial kann auf diese Weise nicht oder zumindest nicht zuverlässig erkannt und vor allem nicht rechtzeitig vor der eigentlichen Analyse aussortiert werden.

Die neuere Meßmethodik der reflektometrischen Interferenzspektroskopie (RIfS), welche inzwischen durch vielfältige Veröffentlichungen unter unterschiedlichen

Aspekten bekanntgeworden ist, in der Lage, markierungsfrei zu arbeiten. Mit dieser Meßmethode ist die direkte Untersuchung von Wechselwirkungen zwischen Biomolekülen möglich, unter anderem von Antikörper-/Antigenreaktionen. Sie beruht auf der Bestimmung von Schichtdickenänderungen an speziell vorbereiteten Biosensoren und ermöglicht so eine zeit- und ortsaufgelöste, markierungsfreie Untersuchung physikalischer, chemischer oder biochemischer Wechselwirkungen in oder an einer dünnen Schicht.

Der Biosensor besteht im wesentlichen aus einem flächigen Träger, dessen eine Oberfläche speziell aktiviert und vorbehandelt ist, um einen für die Messung der Biomoleküle erforderlichen Reaktionspartner durch kovalente Bindung aufnehmen zu können. Wenn z.B. Antikörper-/Antigenreaktionen zu untersuchen sind, wird der entsprechende Antikörper an dem flächigen Träger immobilisiert. Grundsätzlich wird der Reaktionspartner so ausgewählt, daß er passende Erkennungsstrukturen aufweist, um die zu analysierende(n) Spezie(s) erkennen und binden zu können. D.h. die Beschichtung wird so gewählt, daß sie jeweils der zu analysierenden Spezies entspricht oder ihr ähnlich ist.
Die so zu untersuchende Probe wird dann in Kontakt mit dem speziell beschichteten, den Reaktionspartner aufweisenden Träger, dem Biosensor, gebracht. In einer folgenden Inkubationsphase können die zu analysierenden Spezies in der Probe an die entsprechenden Molekülstrukturen der Trägerbeschichtung binden. Die Inkubationsphase wird nach einer vorherbestimmten Zeit durch ein Spülen des Trägers beendet. Die Wechselwirkung zwischen den zu analysierenden Spezies in der Probe und der Trägerbeschichtung ist als Schichtdickenänderung direkt nachweisbar. Als Nachweismethode dient dabei die Interferenz von Licht definierter Wellenlänge durch Reflexion an der Grenzfläche der dünnen, transparenten Trägerschicht. Es werden Interferenzspektren erhalten, die sich zu den Schichtdickenänderungen in Beziehung setzen lassen.

Aus diesen kurzen, grundsätzlichen Erläuterungen ergibt sich schon, daß ein bei der Durchführung der reflektometrischen Interferenzspektroskopie zu beachtender Aspekt die gezielte Vorbereitung des für die Untersuchung z.B. der Antigen-Antikörper-Wechselwirkungen in physiologischen Flüssigkeiten verwendeten Trägers betrifft.

Durch die WO-A-2006/131225 ist diesbezüglich ein Stand der Technik bekanntgeworden, welcher die Vorbereitung des Trägers näher beschreibt. Bevor auf diesen eine Substanz aufgebracht wird, die dem oder den zu analysierenden Spezies oder gegebenenfalls Derivat(en) davon entspricht, wird die Trägeroberfläche zunächst aktiviert und anschließend mit 3-Glycidyloxypropyltrimethoxysilan (GOPTS) modifiziert, indem die Oberfläche des Trägers damit belegt und mit einem weiteren Träger bedeckt wird, wodurch sich eine Sandwichanordnung ergibt. Eine solche Sandwichanordnung ist günstig, weil sich dadurch gleich zwei Träger mit derselben Qualität präparieren lassen. Sie ist jedoch nicht zwingend erforderlich. Die so erhaltenen Träger werden in ihrer Sandwichanordnung trocknen gelassen und können anschließend nach Ablauf einer bestimmten Zeit durch Spülen mit einer geeigneten Flüssigkeit zur Aufnahme des oder der zu analysierenden Spezies oder jeweils einem Derivate davon, d.h. zur selektiven Reaktion mit diesen weiterbehandelt werden. Als physiologische Flüssigkeiten, die unter Verwendung dieses Trägers untersucht werden können, werden u.a. Blutserum und Blutplasma genannt.

Die Druckschrift US 2005/026193 A1 gehört zum Stand der Technik und beschreibt einen Träger für einen Biosensorarray, gekennzeichnet durch eine implizite Codierung, wobei die reaktiven Elemente mit codierungsbildenden Ankermolekülen oder einem Barcode versehen sind. Die Ankermoleküle weisen ein Muster auf und die Mustererkennung ist Teil der Analyse und mit dieser gekoppelt. Die Muster befinden sich in der obersten Schicht der Spots und sind nur durch die Analysereaktion sichtbar. Die Wiedererkennung des Trägers ist damit von der Analysereaktion abhängig.

Die Druckschrift EP 1 584 372 A2 gehört ebenfalls zum Stand der Technik und offenbart einen Microarray der mit Spots versehen ist, die so kodiert sind, dass sie eine Information in Form einer binären oder tertiären Nummernfolge ergeben. Diese Druckschrift betrifft jedoch den Bereich der Aminosäurenproduktion und insbesondere den Aufbau von DNA. Es wird hierbei eine Codierung erzeugt, um die Hybridisierung zu messen. Die Druckschrift beinhaltet jedoch keine Lehre zum Auslesen eines Codes.

In der EP 1 388 587 A1 wird eine Methode zur Vereinfachung von DNA-Analysen offenbart. Es wird ein Biochip für die Untersuchung von DNA-Fragmenten oder anderen Biomolekülen verwendet, die sich gebunden auf einem Träger befinden und als Spots angeordnet sind. Auch in dieser beschriebenen Methode ist die Mustererkennung Teil der Analyse und mit dieser gekoppelt.

In der WO 02/059603 ist ein wiedererkennbarer Träger offenbart, mit einem Substrat und einer widererkennbaren Codierung auf diesem Substrat. Die Wiedererkennung wird über Löcher oder optische Eigenschaften ermöglicht. Wieder gilt, dass es sich bei der Codierung um eine solche handelt, die in Interaktion mit einer Probe zur Anwendung kommt, sodass die Mustererkennung Teil der Analyse um mit dieser gekoppelt ist.

Die GB 2 404 918 A betrifft einen kodierten Träger, mit einem kodierten Bereich und einem Bereich, in dem chemische Reaktionen stattfinden können. ------dieser Bereich ist so vorbereitet, dass er zu Oberflächenplasmaresonanz fähig ist und weist eine dielektrische Metallschicht auf. Die Änderung des Brechungsindex wird über Löcher erzeugt, die sich über den gesamten Bereich erstrecken. Der kodierte Bereich weist vorzugsweise Barcodes auf, mit denen es möglich sein soll, die chemische Reaktion zu verfolgen. Die reaktiven Elemente des Trägers werden gemäß dieser Lehre jedoch nicht mit einer Kodierung zum Zwecke der Qualitätssicherung und Wiedererkennung versehen. Die Probenerkennung dient hier nur zur Verfolgung einer chemischen Reaktion und nicht zur Überprüfung des Trägers als solches.

Aufgrund der Möglichkeit, die reflektometrische Interferenzspektroskopie zur Analytik im Bereich der Nahrungsmittelindustrie, der Medizin und der Umwelt, einschließlich der Wasseranalytik einzusetzen, sind an ihre Gebrauchssicherheit erhebliche, und gegenüber anderen Analyseverfahren deutlich erhöhte Anforderungen zu stellen. Es muß gewährleistet sein, daß die Meßergebnisse nicht durch fehlerhaftes Ausgangsmaterial verfälscht werden können. Auch im Hinblick auf die immer weitere Kreise ziehende Produktpiraterie ist es schließlich erforderlich, eine Identifikation und Nachverfolgung des Analyseprozesses und der darin eingesetzten Materialien vornehmen zu können.

Für die zukünftige Anwendung der reflektometrischen Interferenzspektroskopie in sensiblen Bereichen der Medizin und Nahrungsmittelindustrie steht aber hinsichtlich der Produktsicherheit noch ein ganz anderer Druck im Raum. In Amerika plant die FDA (Food and Drug Administration), wie in Europa die EMEA (European Agency for the Evaluation of Medical Products), für Medikamente und Medizinprodukte einen Echtheitsnachweis über zertifizierte Original-Herstellerdaten zur Pflicht zur erheben, der sich auch auf sensible Analyseverfahren und ihre notwendigen Bestandteile, wie hier die zur Analyse erforderlichen flächigen Träger, ausweiten wird.

Um dieses Ziel zu erreichen, ist bereits ein sogenannter Data Matrix Code als zweidimensionaler Code entwickelt worden. In seiner bekanntesten Anwendung wird mittels Laserlicht im Bereich von Analysegeräten und Instrumenten der Chemie und Medizin eine dauerhafte Direktbeschriftung verwendet. Hierfür bestehen verschiedene, vorgegebene Codemuster, in der Regel in Form eines quadratischen oder rechteckigen Codebildes. Diese sind in DIN-Normen festgelegt und beschrieben, so daß sie weltweit verbindlich Daten- und Produktsicherheit schaffen können. Für die Belange der reflektometrischen Interferenzspektroskopie sind sie aber nicht verwendbar, da sie einerseits zu einer Verfälschung der Analyseergebnisse führen könnten, wenn sie auf der Substratoberfläche aufgebracht werden, weil die Codeinformationen sehr kompakt als Muster von Punkten kodiert sind. Andererseits besteht die weitere Schwierigkeit, daß die Daten im Analyseverfahren selbst nicht mittels des zur Prüfung des Codes erforderlichen Code-Scanners ausgelesen und überprüft werden können. Zusätzlich sind diese Codes auch nicht ausreichend aussagekräftig, da sie das zugrundeliegende Material kennzeichnen, nicht die eigentliche Beschichtung selbst.

Davon ausgehend lag der vorliegenden Erfindung die Aufgabe zugrunde, die gezielte Vorbereitung eines Trägers zu optimieren, der für die Durchführung optischer Meßverfahren verwendet wird und geeignet ist, um beliebige physikalische, chemische oder biochemische Wechselwirkungen zu untersuchen und zu bestimmen, wobei die Optimierung des Trägers im Hinblick auf eine Qualitätssicherung erfolgt, um dadurch die Durchführung des Verfahrens sicherer und fehlerfrei möglich zu machen, und um zukünftigen behördlichen Bestimmungen und Auflagen zu genügen.

Diese Aufgabe wird erfindungsgemäß gelöst durch einen Träger für die Bestimmung physikalischer, chemischer oder biochemischer Wechselwirkungen mittels optischer Meßverfahren gemäß Anpsruch 1.

Unter optischen Meßverfahren sind grundsätzlich solche Meßverfahren zu verstehen, welche Änderungen von Parametern, wie die Änderung des Brechungsindex n, der physikalischen Schichtdicke d oder der optischen Schichtdicke n ^{∗} d, erfassen können. Dazu gehören allgemein spektroskopischer Methoden, reflektometrische Verfahren, wie Ellipsometrie und Abwandlungen davon, zu denen auch die eingangs bereits erwähnte reflektometrische Interferenzspektroskopie (RIfS) gehört. Dazu sollen aber auch rein intensiometrische Untersuchungen gehören, d.h. solche Messungen, bei denen lediglich relative Intensitäten untersucht und aus ihrem Vergleich Meßergebnisse erhalten werden.

Erfindungsgemäß ist es möglich, einen Träger individuell zu markieren und damit unverwechselbar zu machen. Dieser Träger kann z.B. flächig, vorzugsweise aber zumindest eben sein. Grundsätzlich ist im Rahmen dieser Erfindung jeder Träger umfaßt, der für optische Meßverfahren, wie spektroskopische Methoden, wozu unter anderem auch die reflektometrische Interferenzspektroskopie gehört, und/oder intensiometrische Untersuchungen verwendet und eingesetzt werden kann.

Indem die Markierung prinzipiell in jeder Schicht, d.h. sowohl in der Grundschicht, die auf die Substratoberfläche aufgebracht ist, als auch den daran gekoppelten reaktiven Elementen, gegebenenfalls in Kombination untereinander, erfolgen kann, können besonders selektiv, auf die vielfältigen Anwendungsmöglichkeiten von spektroskopischen Methoden und intensiometrischen Untersuchungen zugeschnittene Markierungen sehr sicher vorgenommen werden.
Dabei bietet die Codierung der reaktiven Elemente über spezielle Linkermoleküle den Vorteil einer für Fälscher unzugänglichen, unsichtbaren Signatur, mit der die authentische Herkunft der Träger sicher nachgewiesen werden kann.

Durch die erfindungsgemäße Markierung der Grundschicht und/oder der Markierung der reaktiven Elemente über spezielle Linkermoleküle ergeben sich vielfältige, bisher so nicht mögliche Vorteile der Qualitätskontrolle und -Sicherung.
So können die Träger einer Chargenkontrolle, Lieferkontrolle und später einer Kontrolle bei der Lagerung unterzogen werden, die es nicht erforderlich macht, daß der Träger bereits in Kontakt mit der zu untersuchenden Probe gebracht wird. Im Stand der Technik wurden bisher Codierungen bekannt und verwendet, die als explizite Codierungen in dem Sinne zu bezeichnen sind, als eine für die Kontrolle vorgesehene Referenz in Kontakt mit einer Gegenprobe gebracht worden ist, um dann durch das Ergebnis der Untersuchung Originalware von Fälschungen unterscheiden zu können. Erfindungsgemäß stehen dieser Vorgehensweise nun Kontrollen gegenüber, die als implizite Codierungen bezeichnet werden können, in dem Sinne, daß keine Gegenprobe erforderlich ist. Der für eine Messung vorbereitete, auf Originalität zu prüfende Träger mit der fertig ausgebildeten Grundschicht, welche mit den reaktiven Elementen beschichtet ist, welche z.B. Antikörper sein können, wird auf die ihm eingeprägte Codierung hin überprüft. Das dabei erhaltene Signal, das den Code wiedergibt, kann als ein Trockensignal bezeichnet werden, denn es handelt sich um eine Überprüfung, ohne daß z.B. eine Antikörper-Antigen-Wechselwirkung stattfinden muß bzw. soll. Antigene würden sich nur in der zu vermessenden Probe finden. Diese soll aber unberührt bleiben, bis der für ihre Messung verwendete Träger als Originalware identifiziert worden ist. Entspricht daher das erhaltene Trockensignal mit seiner Codierung einem beispielsweise über eine vorbereitete Look-up Tabelle festgehaltenen und kontrollierbaren Codemuster, wird der Träger für die eigentliche Messung freigegeben. Ansonsten wird ein Alarm ausgelöst und dadurch der Träger als gefälscht identifiziert.
Unter einer Look-up Tabelle im Sinne der vorliegenden Erfindung wird eine vorbereitete, vorgegebene und über ein Computermedium abgelegte Datenstruktur bezeichnet, die es bei Kontrollmessungen schnell ermöglichen soll, Codemuster abzugleichen und so als richtig oder als Fälschung zu erkennen. Ein Vorteil solcher Look-up Tabellen besteht in der Schnelligkeit des Abgleichs, der vor allem für Routineuntersuchungen erforderlich ist. Die dem Träger aufgeprägte Codierung wird als ein sogenannter Komplementärcode in der Look-up Tabelle niedergelegt und kann auf diese Weise in der gewünschten und erforderlichen Schnelligkeit abgerufen werden.

Wenn diese Qualitätskontrolle, die auch als Sicherheits- und Zugangskontrolle bezeichnet werden kann, auf Träger in Form von Mikrotiterplatten angewendet wird, besteht noch die zusätzliche Möglichkeit, den jeweiligen Reiheninhalt in einem speziellen Muster zu codieren. D.h. auf dem Boden bestimmter, vorherbestimmter Wells, d.h. der Vertiefungen der Mikrotiterplatten, aber nicht in allen, wird ein Muster aufgeprägt, wie zuvor allgemein für die Träger beschrieben, und außerdem ist festgelegt, welche der Wells diese Muster aufweisen. Es wird also zusätzlich der Reiheninhalt der Mikrotiterplatte codiert, so daß schon darüber bestimmt werden kann, ob ein Träger in Form einer Mikrotiterplatte gefälscht ist oder nicht. Dies erhöht die Kontrollmöglichkeiten und damit die Sicherheit der anschließenden eigentlichen Messung.

Neben der Möglichkeit einer Fälschung ist auch eine unabsichtliche Beschädigung des jeweiligen Trägers, z.B. in Form eines Transportschadens, in Erwägung zu ziehen oder ein Altern des Materials. Dies muß daher auch überprüft werden können.
Während bei der direkten Codierung über Barcodes ein zufälliges Unversehrtbleiben des eher klein und diskret gehaltenen Barcodebereichs in Kauf genommen werden muß, ermöglicht das erfindungsgemäß über einen größeren Bereich gestreute indirekte Codieren durch Leerstellenmuster und Linkermoleküle und das Codieren des Reiheninhalts von Mikrotiterplatten auch ein leichteres Überprüfen des Trägers auf Unversehrtheit und/oder Alterungsschäden.

Gemäß einer weiteren Ausführungsform weist die Substratoberfläche zusätzlich ein mittels Laserlicht oder chemischem Ätzen aufgebrachtes, eine Codierung bildendes, makroskopisch flächenhaftes Muster auf, wobei das die Codierung bildende Muster der Grundschicht mit dem makroskopisch flächenhaften Muster der Substratoberfläche korrespondiert.

Die mittels Laserlicht oder chemischem Ätzen auf der Substratoberfläche aufgebrachten makroskopisch flächenhaften Muster bilden dann in an sich einfacher Weise Inseln, auf denen die Grundschicht gar nicht erst angebracht werden kann, so daß sich das Muster der Substratoberfläche in der Grundschicht wiederholt bzw. fortsetzt.

Im Gegensatz zu den bisher bekannten zweidimensionalen Codierungen, wie z.B. dem Barcode, ist es erfindungsgemäß möglich, in jeder der auf dem Träger ausgebildeten Schichten, einschließlich der Substratoberfläche selbst, Codemarkierungen vorzunehmen, die es erlauben, Originalware von gefälschter Ware zu unterscheiden. Damit wird die Produktsicherheit gerade bei Anwendungen im Gesundheits- und im medizinischen Bereich, in welchem diese in jedem Fall sichergestellt sein muß, auf mehrfache Weise kontrollierbar.

In bezug auf die schon erwähnten Linkermoleküle, mit denen die reaktiven Elemente versehen sein können, wobei ganz allgemein von Markierungsstoffen ausgegangen werden kann, die hier ihre Dienste tun, und ihrem besondere Vorteil, daß mit ihnen aufgrund der Art ihrer chemischen Struktur unsichtbare Signaturen geschaffen werden, die von potentiellen Fälschern nicht erkannt werden können, ist noch besonders darauf hinzuweisen, daß sie selbstverständlich mit den Codierungen der weiteren Schichten und der Substratoberfläche kombiniert sein kön-nen.
Ganz allgemein kann bei einem erfindungsgemäßen Träger eine Musterbildung auf der Substratoberfläche mit einer Bildung von Fehlstellen in der Grundschicht korrelieren und zusätzlich können spezielle Linkermoleküle, bzw. Markierungsstoffe ein Codierungsmuster bei den reaktiven Elementen erzeugen. Alle Musterbildungen sind vorherbestimmt, d.h. vorgegeben, und können somit separat oder gekoppelt in einem einzigen Scan mittels einer Look-up Tabelle auf Original oder Fälschung, Alterung oder Beschädigung überprüft werden. Heute bekannte Codierungen leisten das nicht.

Wenn die reaktiven Elemente mit eine Codierung bildenden Linkermolekülen versehen sind, können die die Codierung bildenden Linkermoleküle der reaktiven Elemente von den Alkenen abgeleitete Grundstrukturen mit oligomeren Molekülbausteinen aufweisen.

Ganz allgemein läßt sich feststellen, daß geeignete Linkermoleküle über eine kovalente Bindung in einer definierten Verteilung mit den jeweiligen endständigen funktionellen Gruppen der reaktiven Elemente koppeln. Dafür weisen die Linkermoleküle selbst eine geeignete funktionelle Gruppe auf, die an einen biologisch verträglichen Molekülbaustein gekoppelt ist. Solche Molekülbausteine können Gruppierungen sein, die sich von den Alkanen ableiten und vorzugsweise Oligomere sind.
N-Hydroxysuccinimid ist beispielhaft als geeignete koppelnde Verbindung zu nennen, ebenso wie epoxymodifizierte Molekülbausteine, die über die Epoxidgruppe koppeln können.
Die reaktiven Elemente werden über ein gezieltes, dem gewünschten Codierungsmuster entsprechendes Auftragen der die Codierung bildenden Linkermoleküle mit diesen gekoppelt.

Der erfindungsgemäße ebene oder flächige Träger kann als einfacher, flacher Glasträger oder als Mikrotiterplatte ausgebildet sein. Der Boden der jeweiligen Wells der Mikrotiterplatte definiert in einem solchen Fall einen ebenen Träger. Wenn der Träger als Mikrotiterplatte ausgebildet ist, besteht diese vorzugsweise zumindest teilweise aus Borosilikatglas. Es ist dabei ausreichend, wenn der jeweilige Boden aus Borosilikatglas ausgebildet ist.

Alternativ dazu kann der ebene oder flächige Träger aus Kunststoff in Form eines flachen Trägers oder als Mikrotiterplatte ausgebildet sein.

Er kann außerdem an seiner Oberfläche spiegelnde und/oder weiße reflektierende Elemente aufweisen. Diese können vorzugsweise ausgewählt sein aus Aluminium, Zinkoxid, Titanoxid oder Mischungen davon. Dies kann bezüglich der Auswertung der Codierung von Vorteil sein, weil sich auf diese Weise leichter Relativwerte bilden lassen.

Die Erfindung betrifft auch ein Verfahren zur Herstellung eines wiedererkennbaren ebenen oder flächigen Trägers für spektroskopischer Methoden und/oder intensiometrischer Untersuchungen, wie z.B. für die reflektometrische Interferenzspektroskopie an dünnen Schichten, zur Bestimmung physikalischer, chemischer oder biochemischer Wechselwirkungen gemäß Anspruch 9.

Im Gegensatz zu den herkömmliches Codierungen ist es durch das erfindungsgemäße Verfahren möglich, eine Codierung mit deutlich höherer Sicherheit zu schaffen. Dies ist u. a. dadurch bedingt, daß die Substratoberfläche und/oder die Grundschicht und/oder die an die Grundschicht gekoppelten reaktiven Elemente mit ihrem Muster zunächst einmal als eine zweidimensionale Struktur gesehen werden können, was sie im Hinblick auf die Dimensionalität noch nicht wesentlich von einer herkömmlichen Codierung, z.B. einem Barcode, unterscheidet. Da das Codierungsmuster in seiner Ausbildung auf der Substratoberfläche, Grundschicht und/oder an den reaktiven Elementen auch noch die räumliche Orientierung völlig frei nutzen kann, wird im Hinblick auf die Strukturerkennung eine dritte Dimension eröffnet. Die völlig variable, dazu wechselbare Positionierung des Musters auf dem Träger kann hier als dritte Dimension betrachtet werden. Kombiniert mit einer zwangsläufig erforderlichen Mustererkennung in dem Ausleseverfahren der Codierung können dadurch Sprungadressen generiert und ebenfalls in einer Look-up Tabelle als dritte Dimension hinterlegt werden. D.h. im Ausleseverfahren kann die richtige Sprungadresse zugeordnet werden.

Gemäß einer weiteren Ausführungsform wird zunächst auf die Substratoberfläche mittels Laserlicht oder Ätzen ein eine Codierung bildendes makroskopisches, flächenhaftes Muster und/oder anschließend die Grundschicht aufgebracht, wobei die Grundschicht im Bereich des zuvor auf die Substratoberfläche aufgebrachten Musters in einem weiteren Verfahrensschritt mittels eines Lösungsmittels unter Übernahme des Musters der Substratoberfläche ausgewaschen wird. Da dieses Auswaschen zur Folge hat, daß bei dem anschießenden Aufnehmen der reaktiven Elemente an diesen Stellen der Bindungspartner fehlt, setzt sich das Muster der Substratoberfläche automatisch und punktgenau über die Grundschicht bis hin zu den reaktiven Elementen weiter fort. Das auf der Substratoberfläche erzeugte Muster wird auf diese Weise vollständig über mehrere Reaktionsschritte übertragen.

Der Begriff des Ätzens ist im Rahmen der vorliegenden Erfindung breit zu verstehen und umfaßt alle Möglichkeiten des chemischen, physikalisch-chemischen, physikalischen Ätzens, wie andererseits auch die Ablation, d.h. den Materialabtrag in allgemeinster Form.

Als ein bevorzugtes Ätzverfahren ist dabei das Trockenätzen zu nennen, bei dem ein Materialabtrag an der Substratoberfläche durch die im Gasplasma erzeugten Teilchen bewirkt wird. Eine solche Vorgehensweise ist bisher aus der Halbleitertechnik bekannt.
Eine Form dieses Trockenätzens ist das physikalische Ätzen oder Sputterätzen mit Argon oder anderen Edelgasionen, die allein über ihre kinetische Energie einen Materialabtrag bewirken, ohne daß eine chemische Reaktion erfolgt. Eine andere Form des Trockenätzens ist das chemische Ätzen, bei dem die Ätzwirkung ausgehend von dem Gasplasma durch freie Radikale erzeugt wird. Somit ist die Ätzwirkung chemischer Natur. Hier kann im Hinblick auf die Präzision des zu erzeugenden Ätzmusters besonders genutzt werden, daß diese Form des Ätzens isotrop und damit richtungsabhängig erfolgt.
Soll das Ätzen allerdings richtungsunabhängig erfolgen, bietet sich eher die Methode des physikalisch-chemischen Ätzens an, bei der es sich auch um eine Form des chemischen Ätzens handelt, sich jedoch das in der Regel flüchtige Ätzprodukt erst aus dem Edelgasion und einem Molekül auf der Substratoberfläche bildet.

Es ist andererseits aber auch möglich, die Grundschicht auf eine intakte, nicht durch Ätzen oder ein sonstiges Verfahren veränderte Substratoberfläche aufzutragen und dann gemäß einem vorherbestimmten Muster selektiv wieder abzutragen.

Noch alternativ dazu kann auch zunächst die Substratoberfläche aktiviert und anschließend die Grundschicht bei der weiteren Aktivierung mit einem Bindungspartner unter Auflegen einer Maskierung gebildet werden, so daß das makroskopische, flächenhafte Muster durch die mit der Maskierung abgedeckten, freien Bereiche gebildet wird.

Durch diese weitere Ausgestaltung des erfindungsgemäßen Verfahrens werden wiedererkennbare Träger bereitgestellt, die in besonderer Weise in der Lage sind, als Sicherungselemente gegen Fälschungen zu dienen. Diese besondere Sicherheit wird im wesentlichen dadurch erreicht, daß eine hier für die Zwecke der vorliegenden Erfindung sogenannte explizite Codierung mit einer ebenfalls für die Zwecke der vorliegenden Erfindung sogenannten impliziten Codierung kombiniert worden ist. Mit der expliziten Codierung wird dabei die an sich als solche für Dritte lesbare, damit erkenn- und kopierbare Codierung in Form des Ätzens, alternativ dazu die des an sich auch bekannten Printens oder über einen Matrixcode aufgebrachte Codierung in Form eine vorherbestimmten Musters oder einer Gravur bezeichnet. Implizite Codierung bedeutet z.B. das Leerstellenmuster auf der Grundschicht, vorzugsweise gekoppelt mit dem über die reaktiven Stellen vorgesehenen Muster. Wobei durch eine Kreuzkorrelation der expliziten mit der impliziten Codierung eine im wesentlichen fälschungssichere Codierung erhalten wird. Wesentlich für die implizite Codierung ist dabei, daß sie systemimmanent ist, also zu dem Träger und der darauf aufgebrachten Beschichtung, einschließlich der Kopplung mit den reaktiven Elementen, untrennbar zusammengehört, und nur mit besonders dafür geeigneten Auslesegeräten erkannt werden kann.

Dazu wird vorzugsweise gleichzeitig eine solche Ausleseeinheit benutzt, welche für die rechnergestützte Auswertung der Wechselwirkungen zwischen den jeweils untersuchten Biomolekülen, die z.B. im Fall der reflektometrischen Interferenzspektroskopie auf der Bestimmung der Schichtdickenänderungen an der dünnen Schicht beruht, genutzt wird. D.h. die Codierung zur Wiedererkennung des Trägers kann über eine mit der photometrischen Auswerteeinheit gekoppelte Ausleseeinheit gleich mit kontrolliert werden.

Es sind somit im wesentlichen die alternativ und gekoppelt anwendbaren Ausführungsformen der Bildung eines Musters auf der Grundschicht, gegebenenfalls in Zusammenwirkung mit einem schon auf der Substratoberfläche aufgeprägten Muster, und/oder eines Musters, das in der strukturellen Anordnung der auf der Grundschicht befindlichen reaktiven Elemente besteht, vorzugsweise in Kombination mit einer gezielten Fehlstellenanordnung, welche über eine mit dem Rechnersystem der Auswerteeinheit gekoppelte Ausleseeinheit die Wiedererkennung der eingesetzten Träger und damit die Sicherheit des Analysesystems ermöglichen. Grundsätzlich, insbesondere aber auch im Hinblick auf die reaktiven Elemente, besteht nicht nur eine Möglichkeit der Mustererkennung. Im einfachsten Fall kann beispielsweise bei einer sogenannten Multi-Spot-Anwendung, d.h. bei einer Mehrfach-Belegung der fertig vorbereiteten Grundschicht mit einem an sich bekannten Dosiersystem, die Anordnung der so entstehenden Spots in einem bestimmten geometrischen Muster bereits als Codierung (mit)verwendet werden. Andererseits ist es möglich, ein Normraster zu definieren und eine ganz bestimmte Abweichung von diesem Normraster festzulegen, die ihrerseits zur Codierung dienen soll. Wenn dann der so hergestellte Träger und die geometrische Lage der Spots mittels Scannen erfaßt wird, wird sich entsprechend der Variation ein vorherbestimmbares, bezüglich des Maximums versetztes Ergebnis zeigen, daß signifikant ist für die jeweilige gewählte Codierung.
Im Hinblick auf die reaktiven Elemente besteht über das bisher Beschriebene hinaus noch eine weitere Möglichkeit, eine fälschungssichere Codierung vorzunehmen. Diese reaktiven Elemente können unterschiedlich voneinander sein, indem die einen speziell für die Messung der später zu erwartenden Probe ausgewählt sind, andere aber lediglich der Codierung dienen. Durch das an sich bekannte Verfahren des Multi-Spot-Auftragens können die für eine Messung und die für die Codierung benötigten reaktiven Elemente einerseits in einer vorherbe-stimmten Menge und andererseits in einer ebenso vorherbestimmten geometrisch-en Anordnung aufgebracht werden. Diese Mengen- und Ortsbeziehung ergibt ein-en fälschungssicheren, durch Scannen schnell überprüfbaren Code.

Die Erfindung betrifft zusätzlich erfindungsgemäße Verwendungen des erfindungsgemäßen Trägers in einer seiner weiter oben beschriebenen Ausführungsformen zur Analyse von Biomolekülen bei Sicherheitskontrollen, Zugangskontrollen oder in der in-vitro-Diagnostik.

Vorzugsweise ist der bei diesen Verwendungen eingesetzte Träger hergestellt, wie ebenfalls weiter oben beschrieben worden ist.

Im folgenden soll die Erfindung anhand von Ausführungsbeispielen und der beigefügten Zeichnung näher erläutert werden.

Es zeigen:

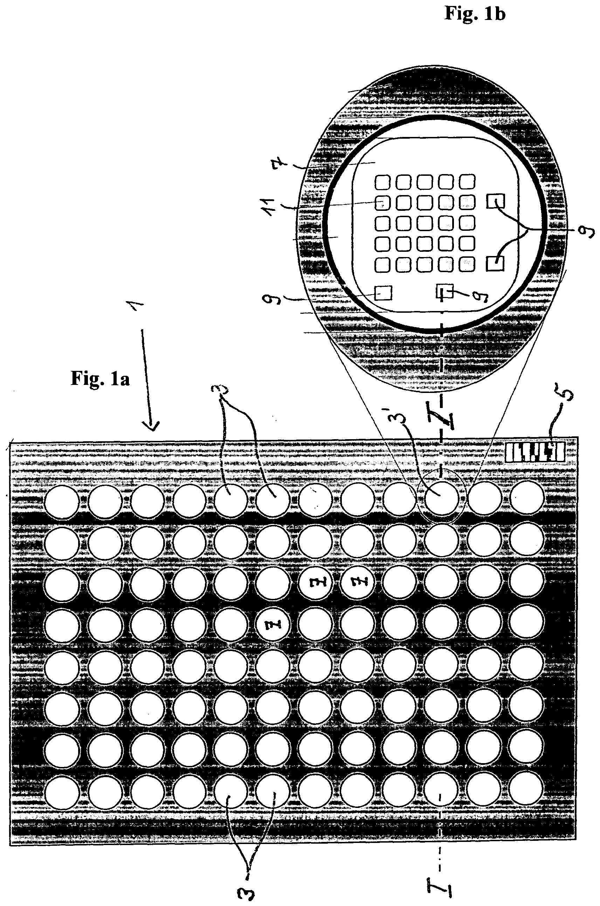

- Fig. 1a:: Eine Mikrotiterplatte mit einer Vielzahl von in Reihen angeordneten Wells, in die teilweise eine Codierung eingearbeitet ist;

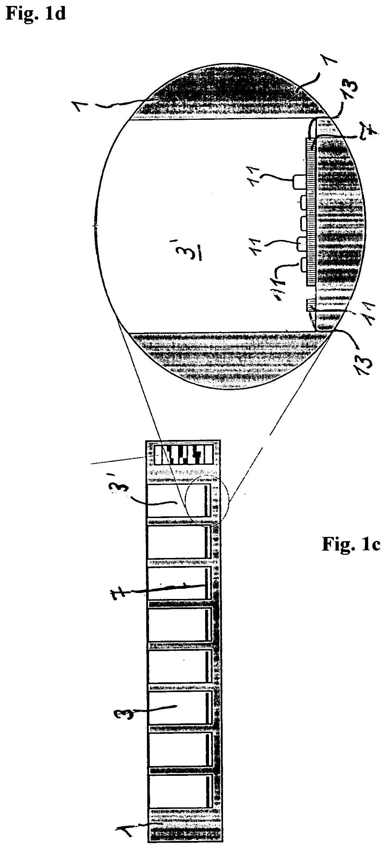

- Fig. 1b:: Eine Draufsicht auf ein ausgewähltes Well der Mikrotiterplatte im Bereich der Schnittlinie I - I gemäß Fig. 1;
- Fig. 1c:: Einen Schnitt durch die Mikrotiterplatte entlang der Schnittlinie I - I von Fig. 1, die mit einer Beschichtung versehene Wells aufweist, und
- Fig. 1d:: Einen Schnitt durch ein ausgewähltes Well der Mikrotiterplatte, wie in Fig. 1c markiert, mit einer Codierung in Form von geometrisch unterschiedlich angeordneten, als Spots aufgetragenen reaktiven Elementen.

### Ausführungsbeispiele

Wenn ein modifizierter, wiedererkennbarer Träger hergestellt werden soll, kann das Vorgehen bei der Oberflächenbeschichtung grundsätzlich mit den Schritten Reinigung und Aktivierung der Substratoberfläche, Bilden einer Grundschicht, vorzugsweise durch Silanisierung, Immobilisieren der reaktiven Elemente in Form eines ausgewählten Biopolymers und Funktionalisierung des so immobilisierten Biopolymers mit sogenannten, im folgenden noch näher definierten Fängermolekülen beschrieben werden.

### Beschichten eines Glasträgers mit einem eine Codierung bildenden, makroskopischen, flächenhaften Muster

### I.1 Bilden einer Codierung auf der Substratoberfläche mittels Spotten

Gemäß diesem Ausführungsbeispiel wird als Glasträger beispielhaft ein Objektträgerglas verwendet. Die Verwendung dieses Objektträgerglases erfolgt lediglich beispielhaft. Es ist genauso möglich und je nach Anwendung sogar bevorzugt, anstelle des Objektträgerglases ein anderes an sich dem Fachmann geläufiges Glas einzusetzen, beispielsweise ein Glas mit optischer Vergütung. Der Glasträger wird zunächst gereinigt, indem er für maximal 1 min in 6 N KOH eingelegt und anschließend mit Reinstwasser gespült wird. Dann wird er aktiviert, indem OH-Gruppen auf der Glasoberfläche erzeugt werden. Im folgenden wird diese Glasoberfläche als Substratoberfläche bezeichnet.

Die Aktivierung der Substratoberfläche erfolgt mit frisch angesetzter Piranha-Lösung. Bei vollflächiger Aktivierung wird der Glasträger etwa 15 min lang mit der frisch angesetzten Piranha-Lösung im Ultraschallbad behandelt. Anschließend wird er gründlich mit Reinstwasser gespült und im Stickstoffstrom getrocknet. Unter Piranha-Lösung ist Peroxomonoschwefelsäure zu verstehen, die vorliegend durch Zugabe von konz. Schwefelsäure zu einer 30%-igen Wasserstoffperoxidlösung im Volumenverhältnis konz. Schwefelsäure zu Wasserstoffperoxidlösung von 3:2 hergestellt wird.

Die Bildung einer wiedererkennbaren, zuverlässigen Codierung auf der Substratoberfläche bei dieser Aktivierung bereitete zunächst erhebliche Schwierigkeiten. Dabei besteht das Problem, gezielt ein genau definiertes, ortsaufgelöstes Muster aufzubringen. Dies gelang in einer Ausführungsform mittels Spotten. Hierfür wurde das TopSpot®- Verfahren verwendet. Mit diesem Verfahren wurde ein berührungsloses und vor allem gleichzeitiges und sauber ortsaufgelöstes Aufbringen der Piranha- Lösung auf der Substratoberfläche in einem dem gewünschten Codierungsmuster entsprechenden, engen Raster möglich.

Die TopSpot®-Technologie ist im Handel von der Biofluidix GmbH, Freiburg, Deutschland, erhältlich.
Das TopSpot®- Verfahren basiert auf einem mikrostrukturierten Druckkopf aus einem Siliziumträger, in dem sich ein Array mit bis zu 96 kreisförmigen Düsen befindet. Der Siliziumkern ist von Pyrex umgeben. Die Piranha-Lösung wird in zumindest ein dafür vorgesehenes Reservoir des Druckkopfes eingefüllt und allein durch Kapillarkräfte zu den zentral gelegenen Düsen geleitet, die in einem Raster von 500 µm angeordnet sind. Der Druckkopf wird dann in ein Druckmodul eingebaut das den eigentlichen Antrieb enthält. Zur Tropfenablösung dient ein Kolben, der auf einer flexiblen Dichtung oberhalb des Düsenfensters beweglich gelagert ist. Durch die Ansteuerung eines Piezoaktors wird der Kolben verdrängt. Diese Verdrängung generiert einen Druckpuls in der abgeschlossenen Luftkammer zwischen dem Kolben und den Düsen. Dieser Druckpuls wirkt auf alle Düsen gleichzeitig. Er führt dazu, daß aus allen Düsen gleichzeitig ein einzelnes Flüssigkeitströpfchen abgegeben wird. Das Volumen dieser Tröpfchen liegt bei diesem pneumatischen Verfahren bei ca. 1 nl (de Heij, B., Daub, M., Gutmann, O., Niekrawietz, R., Sandmaier, H. & Zengerle, R., (2004) "Highly parallel dispensing of chemical and biological reagents", Analytical and Bioanalytical Chemistry, 378, 119-122).

Mit diesem Verfahren konnte reproduzierbar ein genau definiertes, ortsaufgelöstes Muster auf der Substratoberfläche erzeugt werden, das durch die Piranha-Lösung aktivierte Bereiche genau von den nicht aktivierten Bereichen unterscheiden ließ. Es wurden mit dem gleichen Erfolg, d.h. mit der gleichen Qualität, Muster unterschiedlicher Ortsauflösung auf die Substratoberfläche geprägt.

### I.2 Bilden einer Codierung auf der Substratoberfläche mittels Drucken

Auch bei diesem Ausführungsbeispiel wurde wieder ein Objektglasträger verwendet und die Aktivierung erfolgte genauso mit Piranha-Lösung, wie dies schon im ersten Ausführungsbeispiel, unter **I.1** näher beschrieben ist.

Die Bildung einer wiedererkennbaren, zuverlässigen Codierung auf der Substratoberfläche durch das gezielte Aufbringen eines genau definierten, ortsaufgelösten Musters wurde in diesem Ausführungsbeispiel mittels Drucken unter Verwendung eines MicroDrop-Dosiersystems erreicht.

Ein solches MicroDrop-Dosiersystem ist im Handel von der microdrop Technologies GmbH, Norderstedt, Deutschland, erhältlich.

Das MicroDrop-Dosiersystem basiert auf der Technologie der Tintenstrahldrucker. Mit einer Piezopumpe, bestehend aus einer Kapillare mit einem piezoelektrischen Element, wird ein sehr schneller Druckanstieg erzeugt, der sich mit Schallgeschwindigkeit durch die Flüssigkeit zu der Düsenöffnung fortpflanzt und eine Flüssigkeitsmenge in einer Kapillare aktiv verdrängt, und damit eine feine Flüssigkeitssäule mit hoher Beschleunigung die Düse verläßt. Der Ausstoß verläuft so schnell, daß die Flüssigkeit ausgestoßen wird, ohne den Kapillarrand zu benetzen. Es können Tropfen im Bereich von 50 pl bis 500 pl, entsprechend eines Tropfendurchmessers von 300 µm bis 100 µm, erzeugt werden. Zur Positionierung der Tropfen wird entweder ein XYZ-Tisch oder ein geeigneter Roboter verwendet (Schober, A., Guenther, R., Schwienhorst, A., Doering, M. & Lindemann, B. F., (1993), "Accurate high-speed liquid handling of very small biological samples", Biotechniques, 15, 324-329).

Auch mit diesem Verfahren ist es gelungen, reproduzierbar ein genau definiertes, ortsaufgelöstes Muster auf der Substratoberfläche zu erzeugen, das durch die Piranha-Lösung aktivierte Bereiche genau von den nicht aktivierten Bereichen unterscheiden ließ.

Es wurden mit dem gleichen Erfolg, d.h. mit der gleichen Qualität, Muster unterschiedlicher Ortsauflösung auf die Substratoberfläche geprägt.

### I.3 Bilden einer Codierung auf der Substratoberfläche mittels O₂-Plasma

Alternativ zu den unter **I.1** und **I.2** beschriebenen Verfahren, genau definierte, ortsaufgelöste Muster auf der Substratoberfläche durch gezielte Aktivierung mit Piranha-Lösung zu erzeugen, kann auch mit O₂-Plasma aktiviert werden.

Dafür werden bei Einsatz von Glasträger vorzugsweise solche verwendet, die eine gegenüber Säure labile Beschichtung aufweisen. Solche Glasträger sind an sich im Stand der Technik bekannt. Die hier möglichen Beschichtungen umfassen z.B. solche mit TiO₂ und ZnO.
Es können aber genauso gut Träger aus Kunststoff verwendet werden, wie solche aus TOPAS (Cycloolefin-Copolymer (COC) der Firma Topas Advanced Polymers GmbH, Frankfurt a.M., Deutschland) oder PMMA (Polymethylmethacrylat), um nur eine beispielhafte Auswahl zu nennen.
Im Ausführungsbeispiel wurde ein TOPAS-Kunststoffträger 15 min lang im Sauerstoffplasma (300 W, 0,8 mbar O₂) aktiviert. Vorteilhaft ist, daß die Oberfläche bei dieser Behandlung gleichzeitig auch gereinigt wird, so daß ein vorheriger Reinigungsschritt entfallen kann.

Um bei dieser Art der Aktivierung reproduzierbar ein genau definiertes, ortsaufgelöstes Muster auf der Substratoberfläche zu erzeugen, wurde eine dem jeweils gewünschten Muster entsprechend angefertigte Maske aus Teflon® verwendet. Diese wurde während der Aktivierung auf die Substratoberfläche gepreßt. Alle von der Teflonmaske bedeckten Teile der Substratoberfläche blieben nicht-aktiviert.

Auch mit diesem Verfahren ist es daher gelungen, reproduzierbar ein genau definiertes, ortsaufgelöstes Muster auf der Substratoberfläche zu erzeugen, das durch das Sauerstoffplasma aktivierte Bereiche genau von den durch die Maske abgedeckten, nicht aktivierten Bereichen unterscheiden ließ.
Es wurden mit dem gleichen Erfolg, d.h. mit der gleichen Qualität, Muster unterschiedlicher Ortsauflösung durch Verwendung verschiedenster Masken auf die Substratoberfläche geprägt.

Alternativ zu der Aktivierung durch Sauerstoffplasma kann auch eine Aktivierung mittels Barriereentladung eingesetzt werden.

### II. Bilden einer Codierung in der Grundschicht

### II.1 Bilden einer Codierung in der Grundschicht bei vollflächig aktivierter Substratoberfläche

Ein Glasträger wird gereinigt und aktiviert, wie weiter oben, unter **I.1**, im ersten und zweiten Absatz, zunächst allgemein beschrieben.

Die Substratoberfläche des Glasträgers ist nun für eine Oberflächenbehandlung in Form einer Silanisierung mit Epoxygruppen vorbereitet, die im Ausführungsbeispiel mit einem Epoxysilan in Form von 3-(Glycidyloxypropyl)trimethoxysilan (GOPTS) durchgeführt wird. Alternativ dazu können z.B. auch Phenethyltrichlorsilan, Octadecyltrichlorsilan oder andere entsprechende Verbindungen verwendet werden.

Auf die gereinigte und aktivierte Substratoberfläche des Glasträgers werden 15 µL/cm² GOPTS aufgebracht.

### II.1.1 Bilden einer Codierung durch Spotten

Hierfür wurde wieder das TopSpot®- Verfahren verwendet, wie weiter oben, unter I.I., ausführlich beschrieben. Es wurden verschiedene Muster aufgebracht. Es zeigte sich jedes Mal, daß mit diesem Verfahren auch hier ein berührungsloses und vor allem gleichzeitiges und sauber ortsaufgelöstes Aufbringen des GOPTS auf der Substratoberfläche möglich war, dazu in einem dem gewünschten Codierungsmuster entsprechenden engen Raster.

### II.1.2 Bilden einer Codierung durch Drucken

Hierfür wurde wieder das MicroDrop-Dosiersystem verwendet, wie weiter oben, unter **I.2**., ausführlich beschrieben. Auch mit diesem Verfahren ist es gelungen, reproduzierbar ein genau definiertes, ortsaufgelöstes Muster auf der Substratoberfläche zu erzeugen, das durch GOPTS belegte Bereiche genau von den nicht belegten Bereichen unterscheiden ließ.

Es wurden mit dem gleichen Erfolg, d.h. mit der gleichen Qualität, Muster unterschiedlicher Ortsauflösung auf die Substratoberfläche geprägt.

### II.1.3 Bilden einer Codierung durch Deaktivierung mittels Laserlicht oder chemisch

Ein Glasträger wird gereinigt und aktiviert, wie weiter oben, unter Ll, im ersten und zweiten Absatz, zunächst allgemein beschrieben.

Die Substratoberfläche des Glasträgers wird dann vollflächig einer Oberflächenbehandlung in Form einer Silanisierung mit GOPTS unterzogen. Anschließend werden genau definierte Bereiche ortsaufgelöst mittels Laserlicht deaktiviert. Dazu wird im Ausführungsbeispiel ein herkömmlicher IR-Laser verwendet.

Genauso können genau definierte Bereiche ortsaufgelöst chemisch deaktiviert werden. Dabei erfolgt eine genau definierte Kondensation der Silanolgruppen.

### II.1.4 Bilden einer Codierung durch Verwenden unterschiedlicher Silane

Gemäß den weiter oben bereits ausführlich beschriebenen Verfahren des Spottens nach dem TopSpot®-Verfahren oder des Drückens nach dem MicroDrop-Dosiersystem werden für die Bildung der Grundschicht zwei verschiedene Silane verwendet, zum einen GOPTS und zum anderen ein Silan, daß keine reaktiven Gruppen in Form der Epoxy-Gruppen aufweist.

Das Spotten bzw. Drucken erfolgt nun gezielt in der Weise, daß Bereiche der Substratoberfläche mit GOPTS belegt werden, die aktiviert werden sollen, und andere Bereiche entsprechend einem definierten Muster mit dem Silan belegt werden, daß keine Epoxy-Gruppen aufweist und somit keine Aktivierung der Grundschicht an diesen Stellen ermöglicht. Dadurch wird hier der Code in der Grund-Schicht ausgebildet.

### II.1.5 Bilden einer Codierung durch nachträgliche Deaktivierung

Jeweils flächig mit GOPTS behandelte Träger können auch mittels ortsaufgelöster Deaktivierung der aktiven Gruppe für eine weitere Anbindung der reaktiven Elemente im nachfolgend zu erläuternden Schritt inert gemacht werden. Die Deaktivierung kann z.B. durch gezielt aufgebrachtes Wasser erfolgen, wobei die Deaktivierung durch Hydrolyse erreicht wird. Das gezielte Auftragen kann wieder durch das TopSpot®- Verfahren oder das MicroDrop-Dosiersystem erfolgen.

### II.2 Bilden einer Codierung in der Grundschicht bei Aktivierung der Substratoberfläche mit Codierung

Es wird wieder ein Glasträger verwendet, der gereinigt und aktiviert wird, wie weiter oben, unter I. beschrieben. Dabei ist die Substratoberfläche bereits durch eines der oben unter I. genannten Verfahren mit einer Codierung versehen.

Die Substratoberfläche des Glasträgers ist so für eine Oberflächenbehandlung in Form der Silanisierung mit Epoxygruppen vorbereitet, die in diesem Ausführungsbeispiel wieder mit einem Epoxysilan in Form von 3-(Glycidyloxypropyl)trimethoxysilan (GOPTS) durchgeführt wird. Auch hier können alternativ dazu z.B. auch Phenethyltrichlorsilan, Octadecyltrichlorsilan oder andere entsprechende Verbindungen verwendet werden.

Auf die gereinigte und aktivierte Substratoberfläche des Glasträgers werden nun 15 µL/cm² GOPTS aufgebracht. Diese können jedoch nur dort an die Substratoberfläche binden, wo diese auch aktiviert ist. Dadurch wird es möglich, den bereits auf der Substratoberfläche ausgebildeten Code detailgetreu in der Grundschicht abzubilden und nachzubilden. Nicht an die Substratoberfläche gebundenes Silan wird einfach durch Spülen ausgewaschen.

### II.3 Weiterbehandlung der durch Silanisierung aktivierten und codierten Grundschicht

Nachdem das GOPTS oder alternativ ein anderes Silan auf die Substratoberfläche aufgebracht worden ist, wird der so behandelte Träger nach einer Inkubationszeit von einer Stunde in einer trockenen, leeren Gaskammer kurz mit trockenem Aceton mit einem Wassergehalt < 0,1% abgespült und dabei besonders auf eventuelle Rückstande von GOPTS geachtet.

Wegen der Luftfeuchtigkeit müssen die Träger bzw. muß der Träger zügig weiterverarbeitet werden.

### II.3.1 Beschichten mit dem Biopolymer Aminodextran als reaktives Element

Anschließend wird Aminodextran (AMD) auf die so vorbereitete Grundschicht aufgebracht. Dazu werden 15-20µL/cm² Aminodextranlösung (entsprechend 10 mg AMD in 20 L Reinstwasser) aufgebracht.

Auch hier kann das Aufbringen mittels Spotten oder Drucken in der geschilderten Weise erfolgen.

Nach einer Inkubation über Nacht in einer mit Wasserdampf gesättigten Kammer wird gründlich mit Reinstwasser gespült und im Stickstoffstrom getrocknet.

### II.3.2 Beschichten mit dem Biopolymer Di-Amino-Polyethylenglykol als reaktives Element

Für die Immobilisierung von Di-Amino-Polyethylenglykol (DA-PEG) werden 20 µL/cm² DA-PEG-Lösung (entsprechend 4 mg DA-PEG in 1 ml Dichlormethan) auf einen mit GOPTS silanisierten Glasträger aufgebracht und in einer offenen Schale, bei 70°C, vorzugsweise über Nacht, inkubiert. Überschüssiges DA-PEG wird anschließend mit Reinstwasser abgespült und der Träger anschließend im Stickstoffstrom getrocknet.

Die freien, endständigen COOH-Gruppen des PEG werden dann noch zu einem Aktivester aktiviert.

### II.3.3 Bilden einer Codierung in der durch Weiterreaktion mit dem Biopolymer gebildeten Beschichtung

Auch hier gilt wieder analog, daß das Biopolymer nur dort an die Silangruppen der Grundschicht binden kann, wo entsprechende Epoxygruppen vorhanden sind. Somit bildet das Biopolymer wiederum den durch die Silangruppen der Grundschicht vorgegebenen Code erneut detailgenau ab.

Um die Beispiele hier nicht unnötig auszuweiten, soll allgemein auf die sich nun ergebenden Möglichkeiten einer Codierung hingewiesen werden, die auch jeweils so in Versuchsauführungen getestet worden sind:
Wenn bereits auf der Substratoberfläche eine Codierung vorgenommen worden ist, wie weiter oben beschrieben, wird der dort ausgebildete Code detailgetreu in der Grundschicht abgebildet, d.h. durch die Silangruppen ebenso detailgetreu nachgebildet. Das nun an die Epoxygruppen des Silans gekoppelte Biopolymer bildet gleichfalls detailgetreu nach. Es entsteht bis hierher eine sehr saubere, in jeder der Schichten nachvollziehbare, d.h. nachkontrollierbare Codierung mit fast auszuschließender Fehlerquote. Dies dient der Sicherheit gerade bei der Anwendung im medizinischen Bereich.

Aus den bisher vorgeschlagenen Möglichkeiten wird auch deutlich, daß die Codierung erst im Bereich der Grundschicht - unter Aussparung der Substratoberfläche - vorgesehen werden kann. Sie kann zusätzlich auch noch im Bereich der Beschichtung mit den reaktiven Elementen in Form der Biopolymere vorgenommen werden, ohne daß notwendigerweise vorherige Maßnahmen für eine Codierung der Substratoberfläche und/oder der Grundschicht in bezug auf die Silanisierung zu erfolgen hatten. Dies wird im nachfolgenden Ausführungsbeispiel näher erläutert.

### II.3.3 Bilden einer Codierung bei dem Biopolymer

Die im Anschluß an die Silanisierung mit GOPTS erfolgende Umsetzung mit PEG wird in der Weise durchgeführt, daß DA-PEG aus zwei verschiedenen PEG-Sorten, verwendet wird. Das ist in der Weise zu verstehen, daß ein kurzes PEG mit nur einer Kopfgruppe im Überschuß zusammen mit einem längeren PEG mit zwei Kopfgruppen verwendet wird.
Als ein kurzes PEG mit nur einer Kopfgruppe wurde vorliegend DA-PEG mit einem Molekulargewicht von ca. 2000 DA und als längeres PEG mit zwei Kopfgruppen wurde DA-PEG mit einem Molekulargewicht von ca. 6000 DA verwendet. Die verschiedenen PEG- S orten werden wieder entweder durch Spotten oder durch Drucken nach den weiter oben beschriebenen Verfahren gezielt in einem vorbestimmten Muster, das der gewünschten Codierung entspricht, auf den durch Silanisierung vorbereiteten Träger aufgebracht.

Zusätzlich wurden auch Versuche unter Verwendung eines Trägers durchgeführt, bei dem die silanisierte Grundschicht bereits das Muster der gewünschten Codierung aufwies und nun noch das Biopolymer reagieren gelassen werden sollte. Auch dabei wurde DA-PEG aus zwei verschiedenen PEG-Sorten verwendet, wie weiter oben beschrieben. Die PEG-Sorten wurden dabei gemischt und es ergab sich der Vorteil, daß eine Oberfläche mit weniger reaktiven Gruppen erzeugt wird, die aber gleichzeitig zu besseren Anbindungsverhältnissen bei den weitergehenden Bindungen mit den Fängermolekülen, z.B. in Form von Antikörpern, führt.

### II.4 Immobilisierung der Fängermoleküle

Die wie vorhergehend beschrieben erzeugte Beschichtung aus den reaktiven Elementen, welche an ihrer Oberfläche mit der entweder bereits aus zumindest einem der vorherigen Behandlungsschritte übertragenen Codierung und/oder einer durch gezieltes Auftragen von DA-PEG verschiedener Molekulargewichte neu erzeugten Codierung versehen und beschichtet worden ist, kann im folgenden für die Immobilisierung von Fängermolekülen eingesetzt werden.

Alternativ findet eine weitere Behandlung durch eine Umfunktionalisierung in der Weise statt, daß sie anschließend Carbonylfunktionen aufweisen.
Dazu werden die die Beschichtung aus den reaktiven Elementen bildeten Amine mit 15 µl/cm² Glutarsäureanhydrid-Lösung (entsprechend 2 mg Glutarsäureanhydrid in 1 ml trockenem DMF) sechs Stunden lang in einer mit DMF gesättigten Glaskammer inkubiert und anschließend mit DMF und Reinstwasser gespült. Danach erfolgt die Trocknung des Trägers im Stickstoffstrom.
Eine dem jeweiligen Amin wie weiter oben nach einer der Alternativen aufgeprägte Codierung wird dabei im wesentlichen fehlerfrei übertragen.

### II.4.1 Immobilisierung der Fängermoleküle mit reaktiven Elementen, die jeweils zumindest eine Carbonylgruppe aufweisen

Für das Immobilisieren eines Fängermoleküls mit einer Carbonylgruppe wird ein wie oben beschriebener, aminofunktionalisierter Glasträger verwendet. Eine Lösung von 1 mg Fängermolekül in 10 µl DMF mit einem Wassergehalt < 0,1 % und 15 ml DIC (Diisopropylcarbodiimid) die das Biopolymer aufweisenden und codierten Grundschicht aufgebracht und mindestens 6 Stunden lang in einer mit DMF gesättigten Kammer inkubiert.

Für das Immobilisieren von Fängermolekülen, die jeweils eine Aminogruppe aufweisen, werden die, wie weiter oben beschrieben so umfunktionalisierten Biopolymere, daß sie jeweils eine Carbonylfunktion tragen, mit 15 µl/cm einer NHS/DIC-Lösung (15 mg NHS in 100 µl trockenem DMF und 30 µl DIC) etwa 4 Stunden lang in einer mit DMF gesättigten Kammer aktiviert, danach mit trockenem DMF und trockenem Aceton gespült und im Stickstoffstrom getrocknet. Anschließend können die Fängermoleküle auch aus wässrigen Lösungen und mit unterschiedlichen Konzentrationen auf der so vorbereiteten Oberfläche aufgebracht werden.

Selbst hier besteht noch die Möglichkeit, die alternativ aus Substratoberfläche und/oder Silanisierung der Grundschicht und/oder Beschichtung der Grundschicht mit dem Biopolymer (Amin) weiter übertragene Codierung dadurch an die Fängermoleküle im wesentlichen fehlerfrei weiterzugeben, daß die entsprechend nicht aktivierten Bereiche der Biopolymere keine Fängermoleküle binden können. Und es besteht die Möglichkeit, hier erstmals eine Codierung vorzunehmen, indem die Fängermoleküle gemäß einem gewünschten Muster gezielt aufgetragen werden. Bei den für die Zwecke der vorliegenden Erfindung durchgeführten Versuchen wurden diese Muster sowohl durch Spotten als auch durch Drucken nach den oben beschriebenen Methoden aufgebracht.

Als ein Beispiel der Fängermoleküle, wie sie hier in den geschilderten Ausführungsbeispielen zu Demonstrationszwecken eingesetzt wurden, und in der praktischen auch große Bedeutung haben, sind Antikörper zu nennen, welche über Peptidbindungen kovalent an die durch die Biopolymere gebildeten Beschichtung gebunden werden.

### IV. Beschichten einer Mikrotiterplatte aus Glas

Zum Zwecke der Vereinfachung wird an dieser Stelle daraufhingewiesen, daß die oben beschrieben Versuche und Codierungsschritte nicht nur an einem Objektträger, sondern in einem weiteren Versuchslauf auch an einer Mikrotiterplatte aus Glas auf ihre Durchführbarkeit getestet worden sind.

Dabei wurde eine handelsüblich erhältliche, rechteckige Mikrotiterplatte, auch als wellplate, well Platte oder Multiwell-Platte bezeichnet, mit durchschnittlicher Oberflächenrauhigkeit verwendet, die 8 Reihen und 12 Spalten von voneinander isolierten Kavitäten, auch Näpfchen oder Wells genannt, aufweist. Das Füllvolumen der Kavitäten beträgt zwischen 0,3 und 2ml.
Neben solchen 96er Mikrotiterplatten wurde gleichwertig auch eine Mikrotiterplatte verwendet, die nur 24 Kavitäten in 4 Reihen und 8 Spalten, mit jeweils einem Füllvolumen von 0,5 bis 3ml aufwies.

Bei den verwendeten Platten wiesen die Näpfchen einen Flachboden oder einen Boden mit einer U-förmigen Vertiefung auf. Jeder der Böden bzw. jede der Vertiefungen bildet für sich eine Oberfläche, die analog zu dem Glasträger eine Substratoberfläche definiert und entsprechend eine Codierung auf der Substratoberfläche und/oder durch die Silanisierung der Grundschicht und/oder die Belegung der Grundschicht mit dem Biopolymer aufweisen kann, die entsprechend an die reaktiven Elemente und im wesentlichen fehlerfrei weitergegeben wird.

In der gleichen Weise wurden auch flache Träger und Mikrotiterplatten aus Kunststoff getestet, die genauso geeignet sind. Dabei wurden im Handel erhältliche, im wesentlichen transparente Mikrotiterplatten verwendet, wie sie z.B. aus Polystyrol kommerziell gefertigt werden.

Im folgenden soll die Bildung der Codierung anhand einer solchen handelüblichen Glas-Mikrotiterplatte noch einmal unter Bezugnahme auf die Figuren der Zeichnung veranschaulicht werden. Dabei werden zur Bildung der Codierung(en) die weiter oben für den Objektträger aus Glas ausführlich dargestellten Verfahrensweisen verwendet.

In Fig. 1a ist eine Mikrotiterplatte 1 dargestellt, mit einer Vielzahl von in Reihen und Spalten angeordneten Wells 3, in die teilweise eine Codierung eingearbeitet ist. Außerdem weist die mit der erfindungsgemäßen Codierung versehene Mikrotiterplatte 1 auch noch eine herkömmlich bereits bekannte Plattencodierung 5 in Form eines Barcodes auf. Die Böden der Wells 3 weisen eine Schichtfolge gemäß einer der weiter oben beschriebenen Ausführungsformen auf. Ein Well 3' ist im Bereich der Schnittlinie I - I ausgewählt und wird in Fig. 1b näher als Draufsicht gezeigt, so daß die Beschichtung 7 erkennbar ist. Diese Beschichtung 7 weist erfindungsgemäß Leerstellen oder Löcher 9 auf und durch Spotten aufgetragene Bereiche, die im folgenden als Spots 11 bezeichnet werden. Die Spots 11 weisen erfindungsgemäß jeweils eine unterschiedliche Höhe auf. Dies zeigen die Fig. 1c und 1d.

Mit Fig. 1c ist ein Schnitt durch die Mikrotiterplatte 1 entlang der Linie I - I dargestellt, der die Beschichtung 7 in den Wells 3 der Mikrotiterplatte 1 mit einer Codierung in Form von unterschiedlich hohen Schichtdicken der als Spots 11 aufgetragenen reaktiven Elemente zeigt. Mit Fig. 1d wird das in Fig. 1c markierte Well 3' näher dargestellt, das als Schnitt durch das Well 3' zu der Draufsicht auf dasselbe Well 3' von Fig. Ib korrespondiert und die aufgebrachte Codierung in Form von geometrisch unterschiedlich hohen Spots 11 der aufgetragenen reaktiven Elemente zeigt.

Für die Wiedererkennung der Mikrotiterplatte 1 als Originalware steht nun die Erkennung einer fälschungssicheren Mehrfachcodierung zur Verfügung. Diese besteht in der Anordnung der Leerstellen oder Löcher 9, der Höhe der Spots 11. Außerdem kann die Höhe der Beschichtung 13 als solcher gemessen werden. Ein üblicher Abgleich der Plattencodierung 5 in Form des Barcodes erfolgt zusätzlich.

Die vorliegenden Ausführungsbeispiele dienen der näheren Beschreibung der erfindungsgemäßen Träger und ihrer Verwendungsmöglichkeiten. Sie sind erläuternd und nicht beschränkend aufzufassen. Dem Fachmann wird anhand der Beispiele sowie der allgemeinen Beschreibung die Vielfalt der weiteren Kombinationsmöglichkeiten der erfindungsgemäßen Codierungen untereinander ersichtlich, wobei die Erfindung durch die folgenden Ansprüche beschränkt ist.

## Patentansprüche

1. Wiedererkennbarer Träger für die Bestimmung physikalischer, chemischer oder biochemischer Wechselwirkungen mittels optischer Messverfahren, aufweisend:
eine Plattenoberfläche,
eine Vielzahl von in Reihen und Spalten angeordneten Wells (3), die in der Plattenoberfläche gebildet sind, wobei jeder Well (3) eine Bodenoberfläche, die eine Substratoberfläche definiert, besitzt,
eine Grundschicht (7), die auf der Substratoberfläche angeordnet und mit Spots bildenden reaktiven Elementen beschichtet ist, die ihrerseits eine Bindung zu Fängermolekülen eingehen können, und
eine implizierte Codierung zur Kontrolle von Originalität und Qualität des Trägers darstellen, wobei die implizite Codierung durch ein Leerstellenmuster (9) und eine Vielzahl von Spots (11) gebildet ist, die auf der Grundschicht gebildet sind,
wobei
das Leerstellenmuster (9) durch eine Vielzahl von Leerstellen oder Löchern (9) gebildet ist, welche die implizite Codierung darstellen, und
die Vielzahl von Spots (11) in einer vorbestimmten Anordnung angeordnet sind und jeweils eine unterschiedliche Höhe aufweisen, welche die implizite Codierung darstellen.

2. Träger nach Anspruch 1, wobei der Träger eben ausgebildet ist.

3. Träger nach Anspruch 1 oder 2, wobei die Substratoberfläche zusätzlich ein mittels Laserlicht oder chemischem Ätzen aufgebrachtes, eine Codierung bildendes, makroskopische flächenhaftes Muster aufweist, und wobei das die Codierung bildende Muster der Grundschicht und der reaktiven Elemente mit dem makroskopisch flächenhaften Muster der Substratoberfläche korrespondiert.

4. Träger nach einem der Ansprüche 1 bis 3, wobei die reaktiven Elemente von Alkenen abgeleitete Grundstrukturen mit oligomeren Molekülbausteinen ausweisen.

5. Träger nach einem der Ansprüche 1 bis 4, wobei der Träger aus Glas in Form eines flachen Trägers oder als Mikrotiterplatte ausgebildet ist.

6. Träger nach einem der Ansprüche 1 bis 5 wobei der Träger aus Kunststoff in Form eines flachen Trägers oder als Mikrotiterplatte ausgebildet ist.

7. Träger nach Anspruch 5, wobei die Mikrotiterplatte zumindest teilweise aus Borsilikatglas ausgebildet ist.

8. Träger nach einem der Ansprüche 1 bis 7, wobei die Plattenoberfläche spiegelnde und/oder weiße Elemente aufweist, die ausgewählt sind aus der Gruppe bestehend aus Aluminium, Zinkoxid, Titanoxid oder Mischungen davon.

9. Verfahren zur Herstellung eines wiedererkennbaren Trägers zur Bestimmung physikalischer, chemischer und/oder biochemischer Wechselwirkungen, mit den Schritten:
Vorsehen einer Plattenoberfläche,
Bilden einer Vielzahl von Reihen und Spalten angeordneten Wells (3) in der Plattenoberfläche, wobei jeder Well (3) eine Bodenoberfläche, die eine Substratoberfläche definiert, besitzt,
Anordnen einer Grundschicht (7) auf der Substratoberfläche und Beschichten der Grundschicht (7) mit Spots bildenden reaktiven Elementen, die ihrerseits eine Bindung zu Fängermolekülen eingehen können, und eine implizierte Codierung zur Kontrolle von Originalität und Qualität des Trägers auf der Grundschicht darstellen, indem ein Leerstellenmuster (9) und eine Vielzahl von Spots (11) auf der Grundschicht und/oder den reaktiven Elementen gebildet werden,
wobei
das Leerstellenmuster (9) durch eine Vielzahl von Leerstellen oder Löchern (9) gebildet wird, welche die implizite Codierung darstellen, und
die Vielzahl von Spots (11) in einer vorbestimmten Anordnung angeordnet werden und jeweils eine unterschiedliche Höhe aufweisen, welche die implizite Codierung darstellen.

10. Verfahren nach Anspruch 9, wobei zunächst auf die Substratoberfläche mittels Laserlicht oder Ätzen ein eine Codierung bildendes, makroskopisch flächenhaftes Muster und anschließend die Grundschicht aufgebracht wird, wobei die Grundschicht im Bereich des zuvor auf die Substratoberfläche aufgebrachten Musters in einem weiteren Verfahrensschritt mittels eines Lösungsmittels unter Übernahme des Musters der Substratoberfläche ausgewaschen wird.

11. Verfahren nach Anspruch 9 oder 10, Wobei zunächst die Substratoberfläche aktiviert wird und anschließend die Grundschicht unter Auflegung einer Maskierung gebildet wird, so dass das makroskopische, flächenhafte Muster durch die mit der Markierung abgedeckten, freien Bereiche gebildet wird.

12. Verwendung eines Trägers nach einem der Ansprüche 1 bis 8 zur Analyse von Biomolekülen bei Sicherheitskontrollen, Zugangskontrollen oder in der in-vitro-Diagnostik.

## Claims

1. A recognizable carrier for determining physical, chemical or biochemical interactions by means of optical measuring methods, comprising:
a plate surface,
a plurality of wells (3) arranged in rows and columns and formed in said plate surface, wherein each well (3) has a bottom surface defining a substrate surface,
a base layer (7) arranged on said substrate surface and coated with reactive elements forming spots, which in turn are capable of forming a bond with capture molecules, and
represent an implicit encoding for controlling originality and quality of the carrier, said implicit encoding being formed by a blank pattern (9) and a plurality of spots (11), formed on said base layer,
wherein
the blank pattern (9) is formed by a plurality of blanks or holes (9) representing said implicit encoding, and
the plurality of spots (11) is arranged in a predetermined arrangement and each has a different height, representing said implicit encoding.

2. The carrier according to claim 1, wherein the carrier is flat.

3. The carrier according to claim 1 or 2, wherein the substrate surface additionally has a macroscopic planar pattern applied by means of laser light or chemical etching and forming an encoding, said pattern of the base layer and the reactive elements forming said encoding corresponding to the macroscopic planar pattern of said substrate surface.

4. The carrier according to any one of claims 1 to 3, wherein the reactive elements have basic structures with oligomeric molecular building blocks derived from alkenes.

5. The carrier according to any one of claims 1 to 4, wherein the carrier is formed from glass in the form of a flat carrier or is formed as a microtiter plate.

6. The carrier according to claims 1 to 5, wherein the carrier is formed from plastic in the form of a flat carrier or is formed as a microtiter plate.

7. The carrier according to claim 5, wherein the microtiter plate is formed at least partially from borosilicate glass.

8. The carrier according to any one of claims 1 to 7, wherein the plate surface has reflective and/or white elements which are selected from the group consisting of aluminum, zinc oxide, titanium oxide or mixtures thereof.

9. A method for producing a recognizable carrier for determining physical, chemical and/or biochemical interactions, comprising the steps of:
providing a plate surface,
forming a plurality of wells (3) arranged in rows and columns in said plate surface, wherein each well (3) has a bottom surface defining a substrate surface,
arranging a base layer (7) on said substrate surface and coating said base layer (7) with reactive elements, forming spots which in turn are capable of forming a bond with capture molecules and represent an implicit encoding for controlling originality and quality of the carrier on the base layer by forming a blank pattern (9) and a plurality of spots (11) on said base layer and/or said reactive elements,
wherein
the blank pattern (9) is formed by a plurality of blanks or holes (9) representing said implicit encoding, and
the plurality of spots (11) is arranged in a predetermined arrangement and each has a different height, representing said implicit encoding.

10. The method according to claim 9, wherein first a macroscopic planar pattern forming an encoding, and then said base layer, are applied by means of laser light or etching on said substrate surface, wherein the base layer in the area of said pattern applied previously on the substrate surface in a further method step is washed out by means of a solvent, assuming the pattern of said substrate surface.

11. The method according to claim 9 or 10, wherein first said substrate surface is activated and then said base layer is formed by placing a masking such that the macroscopic, planar pattern is formed by the free areas covered with said masking.

12. Use of a carrier according to any one of claims 1 to 8 for analyzing biomolecules at security checkpoints, access controls or in in-vitro diagnostics.

## Revendications

1. Support reconnaissable pour la détermination des interactions physiques, chimiques ou biochimiques au moyen de procédés de mesure optiques, présentant :
une surface de plaque,
une pluralité de puits (3) disposés en rangées et en colonnes formés dans la surface de la plaque, dans lequel chaque puits (3) possède une surface inférieure définissant une surface de substrat,
une couche de base (7) disposée sur la surface du substrat et revêtue d'éléments réactifs qui forment des points et qui, à leur tour, peuvent se lier aux molécules de capture, et
représentent un codage implicite pour contrôler l'originalité et la qualité du support, dans lequel le codage implicite est formé par un motif vierge (9) et une pluralité de points (11) qui sont formés sur la couche de base,
dans lequel
le motif vierge (9) est formé par une pluralité d'espaces vides ou de trous (9) qui représentent le codage implicite, et
la pluralité de points (11) sont disposés selon une disposition prédéterminée et présentent chacun une hauteur différente qui représente le codage implicite.

2. Support selon la revendication 1, dans lequel le support est plan.

3. Support selon la revendication 1 ou 2, dans lequel la surface du substrat présente en outre un motif plan macroscopique de formation de code appliqué au moyen d'une lumière laser ou d'une gravure chimique, et dans lequel le motif de formation de code de la couche de base et des éléments réactifs correspond au motif plan macroscopique de la surface du substrat.

4. Support selon l'une des revendications 1 à 3, dans lequel les éléments réactifs présentent des structures de base dérivées d'alcènes à composants moléculaires oligomères.

5. Support selon l'une des revendications 1 à 4, dans lequel le support en verre se présente sous la forme d'un support plat ou d'une plaque de microtitrage.

6. Support selon l'une des revendications 1 à 5, dans lequel le support en plastique se présente sous la forme d'un support plat ou d'une plaque de microtitrage.

7. Support selon la revendication 5, dans lequel la plaque de microtitrage est au moins partiellement formée de verre borosilicaté.

8. Support selon l'une des revendications 1 à 7, dans laquelle la surface de la plaque présente des éléments réfléchissants et/ou blancs choisis dans le groupe constitué de l'aluminium, de l'oxyde de zinc, de l'oxyde de titane ou de mélanges de ceux-ci.

9. Procédé de production d'un support reconnaissable pour la détermination des interactions physiques, chimiques et/ou biochimiques, avec les étapes :
de prévision d'une surface de plaque,
de formation d'une pluralité de puits (3) disposés en rangées et en colonnes dans la surface de la plaque, dans lequel chaque puits (3) possède une surface inférieure qui définit une surface de substrat,
de disposition d'une couche de base (7) sur la surface du substrat et de revêtement de la couche de base (7) avec des éléments réactifs formant des points, qui à leur tour peuvent se lier aux molécules de capture, et représentent un codage implicite pour contrôler l'originalité et la qualité du support sur la couche de base, un motif vierge (9) et une pluralité de points (11) étant formés sur la couche de base et/ou sur les éléments réactifs,
dans lequel
le motif vierge (9) est formé par une pluralité d'espaces vides ou de trous (9) qui représentent le codage implicite, et
la pluralité de points (11) sont disposés selon une disposition prédéterminée et présentent chacun une hauteur différente qui représente le codage implicite.

10. Procédé selon la revendication 9, dans lequel un motif macroscopiquement plan formant un codage est tout d'abord appliqué à la surface du substrat au moyen d'une lumière laser ou d'une gravure, puis la couche de base est appliquée, dans lequel la couche de base est lavée dans la zone du motif précédemment appliqué sur la surface du substrat dans une autre étape de procédé au moyen d'un solvant avec transfert du motif de la surface du substrat.

11. Procédé selon la revendication 9 ou 10, dans lequel la surface du substrat est d'abord activée et ensuite la couche de base est formée avec l'application d'un masque, de sorte que le motif plan macroscopique est formé par les zones libres couvertes par le marquage.

12. Utilisation d'un support selon l'une des revendications 1 à 8 pour l'analyse de biomolécules dans des contrôles de sécurité, des contrôles d'accès ou dans des diagnostics in vitro.
